# EUROPÄISCHE PATENTANMELDUNG

(11) **EP 1 489 314 A2**
(43) Veröffentlichungstag der Anmeldung: **22.12.2004**
(21) Anmeldenummer: 04014166.5
(22) Anmeldetag: 17.06.2004
(51) Int. Cl.: F16C 11/06

(54) **Kugelgelenk**

(30) Priorität: 20.06.2003 DE 10328109
(71) Anmelder: ZF Lemförder Metallwaren AG, 49448 Lemförde (DE)
(72) Erfinder: Schütte, Carsten, 32351 Stemwede-Levern (DE); Höppner, Holger, 49439 Steinfeld/Mühlen (DE)

(57) **Zusammenfassung**

Die Erfindung betrifft ein Kugelgelenk, beispielsweise für eine Pendelstütze eines Kraftfahrzeugs, mit einem im Wesentlichen ring- oder topfförmigen Gelenkgehäuse (2), in dessen Innenraum eine Lagerschale (3) anordenbar ist, in welcher die Kugel eines Kugelzapfens (1) gleitbeweglich aufnehmbar ist. Dabei sind Innenkontur (4) des Gelenkgehäuses (2) und Außenkontur (4) der Lagerschale (3) im Wesentlichen kegelstumpfförmig ausgebildet.

Das erfindungsgemäße Kugelgelenk zeichnet sich dadurch aus, dass die Lagerschale (3) im Gelenkgehäuse (2) in zapfenaxialer Richtung im Wesentlichen frei positionierbar ist. Damit lässt sich die Verankerung der Lagerschale (2) im Gelenkgehäuse (2) über die korrespondierenden kegelstumpfförmigen Konturen (4) exakt reproduzierbar einstellen.

Mit der Erfindung lassen sich Lebensdauer und Robustheit von Kugelgelenken sowie die Reproduzierbarkeit der qualitätsbestimmenden Eigenschaften der Kugelgelenke bei der Produktion wesentlich verbessern. Dabei werden dank der Erfindung gleichzeitig beträchtliche Vereinfachungen und Kosteneinsparungen bei der Herstellung der Kugelgelenke erzielt.

## Beschreibung

Die Erfindung betrifft ein Kugelgelenk, insbesondere für eine Pendelstütze eines Kraftfahrzeuges, nach dem Oberbegriff des Patentanspruchs 1.
Kugelgelenke der eingangs genannten Art kommen beispielsweise, jedoch keineswegs ausschließlich, in Pendelstützen zum Einsatz, mit denen kraft- bzw. drehmomentbedingte Reaktionsbewegungen beispielsweise von Antrieben, Aggregaten oder Fahrwerksteilen am Kraftfahrzeug gedämpft oder unterbunden werden sollen.

Ein derartiges Kugelgelenk ist beispielsweise aus der US 6,190,080 B1 bekannt. Dieses Kugelgelenk weist ein hohlzylinderförmiges Gelenkgehäuse auf, in dessen Innenraum eine Lagerschale aus Kunststoff zur gleitbeweglichen Aufnahme der auf einem Kugelzapfen angeordneten Gelenkkugel eingesetzt ist. Die Lagerschale des in der genannten Schrift offenbarten Kugelgelenks stützt sich dabei in axialer Richtung des Gelenkgehäuses mittels zweier umlaufender Ringbünde an den beiden Stirnseiten des Gelenkgehäuses ab.

Der erste der beiden umlaufenden Ringbünde ist dabei bereits von vorneherein an die Kunststofflagerschale angeformt, während der dem ersten Ringbund gegenüberliegende zweite Ringbund der Lagerschale bei dem bekannten Kugelgelenk in Form einer kreisringförmigen Schnappverbindung vorliegt, die durch Eindrücken eines zusätzlichen Deckels stabilisiert wird.

Mit anderen Worten wird beim Zusammenbau des bekannten Kugelgelenks die Lagerschale so in das Gehäuse eingesetzt, dass sich der erste Ringbund an einer ersten Stirnfläche des Gelenkgehäuses abstützt, während der zweite Ringbund durch Einschnappen der kreisringförmigen Schnappverbindung und anschließendes Aufdrücken des Sicherungsdeckels hergestellt wird.

Andere bekannte Techniken zur Verankerung der Lagerschale im Gelenkgehäuse bedienen sich beispielsweise des Ultraschallbördelns zur Erzeugung des zweiten Ringbundes, oder es werden Sicherungs- oder Klemmringe eingesetzt, um die Lagerschale axial im Gelenkgehäuse zu verankern. Es ist ferner bekannt, beispielsweise aus der DE 199 14 452 A1 und der US 5,855,448, die korrespondierenden Konturen von Lagerschale und Gelenkgehäuse konisch auszuführen, die Lagerschale bis zu einem Axialanschlag in das Gelenkgehäuse einzuführen, und die Lagerschale beim Verschließen des Gelenkgehäuses unter axiale Druckvorspannung zu setzen. Durch die axiale Druckvorspannung sollen Setzungserscheinungen der Lagerschale bzw. Abnutzungen der Lageroberflächen ausgeglichen werden.

Es hat sich jedoch gezeigt, dass eine so ausgeführte Verankerung der Kunststofflagerschale im Gelenkgehäuse den zunehmenden Anforderungen an Kugelgelenke bezüglich Belastbarkeit, Ausfallsicherheit, Verdrehsicherheit der Lagerschale sowie bezüglich Herstellungskosten oft nicht mehr gerecht wird. Dies ist insbesondere darauf zurückzuführen, dass bei den bekannten Kugelgelenken die Lagerschale zumeist durch axialen Kraft- oder Formschluss bzw. mittels axialer Vorspannung im Gelenkgehäuse befestigt wird, was angesichts der am Kugelgelenk im Betrieb auftretenden Belastungssituation oftmals nicht für eine dauerhafte Fixierung der Lagerschale im Gelenkgehäuse ausreicht.

Zudem führen Fertigungstoleranzen der Lagerschale und des Gelenkgehäuses sowie die mangelhafte Reproduzierbarkeit der Befestigung zu einer hohen Streuungsbreite bei der Fertigungsqualität bekannter Kugelgelenke. Dies gilt insbesondere bei der weit verbreiteten, auf Umformung bzw. Umbördelung der Lagerschale oder auch auf Umformung des Gelenkgehäuserandes basierenden Verbindung zwischen Lagerschale und Gelenkgehäuse. Auch die bekannten, durch Einpressen einer konischen Lagerschale in ein konisches Gelenkgehäuse hergestellten Kugelgelenke leiden unter mangelhafter Reproduzierbarkeit der Verankerung der Lagerschale im Gelenkgehäuse. Diese unerwünschten Streuungsbreiten in der Fertigung lassen sich bei den bekannten Kugelgelenken auch nicht nachträglich etwa dadurch reduzieren, dass Spiel bzw. Toleranzen nachreguliert werden, da diese bekannten Kugelgelenke nach dem Zusammenbau nicht mehr einstellbar sind.

Im Ergebnis bedeutet dies mit anderen Worten, dass eine im Wesentlichen über axiale Bünde bzw. Anschläge im Gelenkgehäuse fixierte Lagerschale die heute bestehenden Anforderungen bezüglich Verdrehsicherung der Lagerschale im Gelenkgehäuse, bezüglich Reproduzierbarkeit der Gelenkparameter bei der Fertigung, sowie bezüglich der Aufnahme hoher radialer Lasten und Stoßbelastungen oft nicht dauerhaft erfüllen kann. Dies ist umso mehr dann der Fall, wenn während des Einsatzes derartiger Kugelgelenke weitere belastende Einflüsse wie beispielsweise Vibrationen, aggressive Medien und/oder Abrasivstoffe auf das Kugelgelenk einwirken, was insbesondere beim Einsatz im Kraftfahrzeug häufig der Fall ist.

Mit diesem Hintergrund ist es die Aufgabe der vorliegenden Erfindung, ein Kugelgelenk zu schaffen, das die genannten Nachteile überwindet und das bei gleichzeitiger Verbesserung von Kostenstruktur und Prozesssicherheit in der Fertigung wesentliche Verbesserungen bezüglich der Verankerung der Lagerschale im Gelenkgehäuse aufweist.

Diese Aufgabe wird durch ein Kugelgelenk mit den Merkmalen des Patentanspruchs 1 gelöst.

Bevorzugte Ausführungsformen sind Gegenstand der Unteransprüche.

Das Kugelgelenk gemäß der vorliegenden Erfindung weist in an sich bekannter Weise ein im Wesentlichen ring- oder topfförmiges Gelenkgehäuse auf, in dessen Innenraum eine Lagerschale anordenbar ist, welche wiederum die Gelenkkugel eines Kugelzapfens gleitbeweglich aufnimmt. Dabei sind Innenkontur des Gelenkgehäuses sowie Außenkontur der Lagerschale im Wesentlichen kegelstumpfförmig ausgebildet.

Erfindungsgemäß zeichnet sich das Kugelgelenk jedoch dadurch aus, dass die Lagerschale im Gelenkgehäuse in zapfenaxialer Richtung im Wesentlichen frei positionierbar ist.

Dies bedeutet zunächst einmal, dass die Fixierung der Lagerschale im Gelenkgehäuse bei dem erfindungsgemäßen Kugelgelenk in an sich bekannter Weise dadurch erfolgt, dass die außen konisch zulaufende Lagerschale in dem zur Lagerschale formkomplementären, innen ebenfalls konisch ausgebildeten Gelenkgehäuse durch axiales Einführen mit anschließender, geeigneter axialer Fixierung verankert wird. Erfindungsgemäß wird die Lagerschale dabei jedoch nicht wie im Stand der Technik bis zu einem anhand der Geometrie von Lagerschale und Gelenkgehäuse festgelegten Anschlag eingeführt oder eingepresst. Bei dem erfindungsgemäßen Kugelgelenk ist ein solcher Axialanschlag zur Festlegung der zapfenaxialen Position der Lagerschale im Gelenkgehäuse vielmehr überhaupt nicht vorhanden, sondern die Lagerschale ist in einem gewissen Bereich um ihre Nennposition in axialer Richtung im Gelenkgehäuse verschiebbar.

Dies bedeutet im Ergebnis, dass sich mittels Steuerung von Parametern wie insbesondere Einpresskraft bzw. Einpresstiefe beim Zusammenbau des Kugelgelenks eine äußerst gute Reproduzierbarkeit bzw. Einstellbarkeit der Verankerung der Lagerschale im Gelenkgehäuse erzielen lässt. Ohne weiteres lassen sich dabei durch entsprechende Variation und Anpassung der Einpresskraft bzw. des Einpressweges unvermeidliche Toleranzen insbesondere des zumeist spanlos gefertigten Gelenkgehäuses ausgleichen.

Außerdem führt die Verankerung der Lagerschale im Gelenkgehäuse über die kontrollierbar ineinandergepressten kegelstumpfförmigen Oberflächen zu einer insgesamt erheblich besseren, robusteren und dauerhafteren Verbindung zwischen Lagerschale und Gelenkgehäuse, als dies mit den bekannten Verankerungen möglich ist, bei denen im Wesentlichen mit Axialanschlägen bzw. axialen Verankerungskräften gearbeitet wird.

Für die Erfindung ist es dabei nicht wesentlich, auf welche Weise die Lagerschale im Gelenkgehäuse in zapfenaxialer Richtung fixiert bzw. gesichert wird, solange damit zuverlässig sichergestellt ist, dass sich die beim Einpressen der Lagerschale festgelegte Position der Lagerschale in axialer Richtung im Betrieb des Kugelgelenks nicht selbsttätig verändern kann. Daher kommen im Prinzip alle denkbaren Methoden der axialen Fixierung der Lagerschale im Gelenkgehäuse, namentlich beispielsweise Klemmen, Kleben, Schrauben oder Umformen in Frage.

Gemäß einer bevorzugten Ausführungsform der Erfindung wird die konische Lagerschale jedoch dadurch im Gelenkgehäuse verankert, dass für den Steigungswinkel der kegelstumpfförmigen Außenkontur der Lagerschale sowie der ebenfalls kegelstumpfförmigen Innenkontur des Gelenkgehäuses ein so kleiner Wert verwendet wird, dass der Reibungswinkel der Materialpaarung von Lagerschale und Gelenkgehäuse unterschritten ist; mit anderen Worten, dass Selbsthemmung zwischen Lagerschale und Gelenkgehäuse eintritt. Auf diese Weise wird es prinzipiell möglich, die Lagerschale lediglich durch axiales Einpressen in das Gelenkgehäuse kontrolliert und dauerhaft mit dem Gelenkgehäuse zu verbinden.

Gemäß einer weiteren bevorzugten Ausführungsform der Erfindung erfolgt eine axiale Fixierung der Lagerschale relativ zum Gelenkgehäuse durch einen zwischen Gelenkgehäuse und Lagerschale angeordneten Klemmring. Diese axiale Fixierung kann dabei zusätzlich zu einer selbsthemmend ausgebildeten Geometrie von Lagerschale und Gelenkgehäuse als weitere Sicherheit gegen Herausziehen der Lagerschale aus dem Gelenkgehäuse vorgesehen werden. Die axiale Fixierung durch einen Klemmring kann jedoch auch dann zum Einsatz kommen, wenn der Steigungswinkel für die Außenkontur von Lagerschale und Gelenkgehäuse so gewählt wird, dass ausreichende Selbsthemmung nicht gewährleistet ist.
Gemäß weiterer Ausführungsformen der Erfindung kann dabei der Klemmring kugelzapfenseitig am Gelenkgehäuse angeordnet sein. Bei einer solchen Anordnung übt der Klemmring eine zusätzliche Druckkraft auf die Lagerschale aus, welche die Lagerschale in das konische Gelenkgehäuse hineindrückt, bzw. eine Lockerung der Verbindung zwischen Lagerschale und Gelenkgehäuse verhindert. Der Klemmring kann jedoch auch gehäusedeckelseitig, bzw. auf der dem Kugelzapfen abgewandten Seite, am Gelenkgehäuse angeordnet sein. Bei einer solchen Anordnung des Klemmrings, die insbesondere bei ringförmigen Gelenkgehäusen zum Einsatz kommt, wird die Lagerschale durch den Klemmring mittels zusätzlicher, auf die Lagerschale ausgeübten Zugkräfte im Gelenkgehäuse fixiert.
Ein dem Kugelzapfen gegenüberliegend angeordneter Klemmring weist eine Reihe zusätzlicher Vorteil auf. Zunächst einmal wird hierdurch der Aufbau des gesamten Kugelgelenks, insbesondere jedoch des Gelenkgehäuses, weiter erheblich vereinfacht. Auch der Zusammenbau des Kugelgelenks gestaltet sich aufgrund der leichteren Zugänglichkeit des dem Kugelzapfen gegenüberliegenden Klemmrings besonders einfach und damit kostengünstig. Darüber hinaus lässt sich ein Kugelgelenk mit einer solchen Klemmringanordnung, bei eventuellem Verschleiß während des Betriebs, besonders einfach und ohne aufwändige Spezialvorrichtungen durch einfaches Nachpressen wieder spielfrei nachregulieren. Dabei gestattet der dem Kugelzapfen gegenüberliegende Klemmring auch eine bessere Sichtkontrolle des sicheren Zusammenbauzustands des Kugelgelenks.

Eine weitere, ebenfalls gemäß einer Ausführungsform der Erfindung vorgesehene Möglichkeit der Fixierung bzw. Sicherung der Lagerschale im Gelenkgehäuse gegen axiales Herausziehen besteht darin, dass der gehäusedeckelseitige bzw. dem Kugelzapfen gegenüberliegende Rand der Lagerschale nach dem Einpressen in das konische Gelenkgehäuse beispielsweise mittels des an sich bekannten Ultraschallbördelns umgeformt wird. Diese Umformung des Randes der Lagerschale kann dabei zusätzlich zum Einsatz eines Klemmrings, oder aber alternativ dazu erfolgen.

Gemäß einer weiteren Ausführungsform der Erfindung weist die Lagerschale im Bereich des Äquators der Gelenkkugel kugelseitig und/oder gehäuseseitig eine vorzugsweise umlaufende Oberflächenausnehmung auf. Diese Äquatorausnehmung entlastet den äquatomahen Bereich der Lagerschale, der zudem zumeist die geringste Wandstärke aufweist, von den beim Einpressen entstehenden radialen Kräften. Auf diese Weise lassen sich ungleichmäßige Kraftverteilungen zwischen Kugel und Lagerschale und damit verbundenes Klemmen der Kugel in der Lagerschale oder ungleichmäßige Abnutzung von Kugel und Lagerschale vermeiden.

Eine weitere Ausführungsform der Erfindung sieht vor, dass die Lagerschale auf ihrer kugelseitigen Oberfläche Schmiernuten aufweist, wobei die Schmiernuten mit dem zapfenseitigen Innenraum der Lagerschale in Verbindung stehen. Auf diese Weise lässt sich eine dauerhafte Schmierung der Kontaktfläche zwischen Lagerschale und Kugelzapfen sowie die Nachführung von Schmiermittel aus dem Speicherbereich zwischen Kugelhals und Innenraum der Lagerschale gewährleisten. Im Folgenden wird die Erfindung anhand lediglich Ausführungsbeispiele darstellender Zeichnungen näher erläutert. Es zeigt:
- Figur 1: in schematischer Längsschnittdarstellung eine erste Ausführungsform eines Kugelgelenks gemäß der vorliegenden Erfindung;
- Figur 2: in einer der Figur 1 entsprechenden Darstellung eine weitere Ausführungsform eines Kugelgelenks gemäß der vorliegenden Erfindung; und
- Figur 3: in einer Figur 1 und 2 entsprechenden Darstellung Gelenkgehäuse und Lagerschale für ein Kugelgelenk gemäß Figur 2 im vergrößerten Längsschnitt.

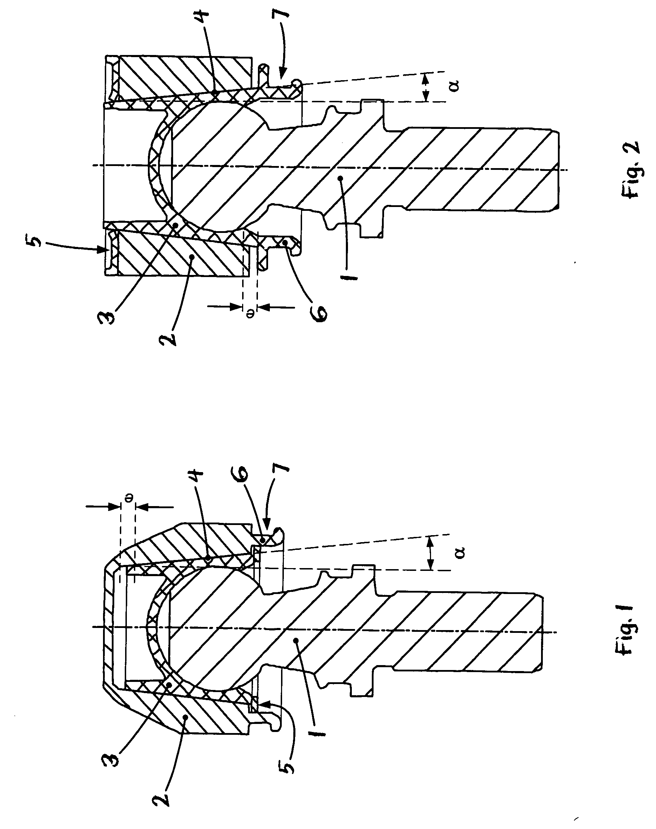

In Figur 1 ist eine erste Ausführungsform eines erfindungsgemäßen Kugelgelenks im Längsschnitt dargestellt. Man erkennt zunächst den Kugelzapfen 1, das Gelenkgehäuse 2 und die zumeist aus Kunststoff bestehende Lagerschale 3. Erfindungsgemäß weist das in Figur 1 dargestellte Kugelgelenk ein Gelenkgehäuse 2 mit einer kegelstumpfförmigen Innenkontur 4 auf. In das Gelenkgehäuse 2 wird bei der Montage des Kugelgelenks die eine ebenfalls kegelstumpfförmige Außenkontur aufweisende Lagerschale 3 zusammen mit dem Kugelzapfen 1 eingepresst.
Der Kegelwinkel α ist dabei so klein gewählt, dass mit Rücksicht auf die vorliegende Materialpaarung zwischen Gelenkgehäuse 2 und Lagerschale 3 Selbsthemmung vorliegt, was bedeutet, dass die Lagerschale 3 nicht selbsttätig - aufgrund der im Wesentlichen radialen Presskraft zwischen Gelenkgehäuse 2 und Lagerschale 3 - in axialer Richtung aus dem Gelenkgehäuse 2 herausgleiten kann. Jedoch ist zur zusätzlichen Sicherung und Festlegung der Lagerschale 3 im Gelenkgehäuse 2 ein zwischen Gelenkgehäuse 2 und Lagerschale 3 angeordneter Klemmring 5 vorgesehen. Der Klemmring 5 lässt sich stufenlos auf der Innenseite des zylindrischen Bereichs 6 des Gelenkgehäuses 2 positionieren, um so die Lagerschale 3 in der jeweiligen, beim Einpressen festgelegten Position zu fixieren. Der zylindrische Bereich 6 des Gelenkgehäuses 2 bildet gleichzeitig an seinem Außendurchmesser eine Balgnut 7 für den in der Figur nicht dargestellten Dichtungsbalg des Kugelgelenks.

Bereits aus der Darstellung der Figur 1 geht deutlich hervor, dass das erfindungsgemäße Kugelgelenk dank der konischen Paarung von Gelenkgehäuse 2 und Lagerschale 3, kombiniert mit der zapfenaxialen Einstellbarkeit der Lagerschale 3 im Gelenkgehäuse 2, die etwa dem mit e bezeichneten Bereich entspricht, mit sehr viel besserer Reproduzierbarkeit und Prozesssicherheit montiert werden kann, wobei gleichzeitig eine erheblich verbesserte Verbindung zwischen Lagerschale 3 und Gelenkgehäuse 2 erreichbar ist. Denn die Festigkeit der Pressverbindung zwischen Gelenkgehäuse 2 und Lagerschale 3 kann beim Zusammenbau des Kugelgelenks nicht mehr nur über eine Einpresskraft in axialer Richtung, sondern nunmehr auch über den aufgrund des flachen Kegelwinkels α sowie aufgrund der axialen Einstellbarkeit e verhältnismäßig langen Einpressweg kontrolliert und gesteuert werden. Zudem ist an der Verbindung zwischen Lagerschale 3 und Gelenkgehäuse 2 nun primär die einer sehr hohen radialen Presskraft ausgesetzte gesamte Außenkontur 4 der Lagerschale 3 bzw. die gesamte Länge der Innenkontur 4 des Gelenkgehäuses 2 beteiligt, und nicht wie beim Stand der Technik lediglich die Schultern zweier Axialanschläge der Lagerschale, die mit zumeist geringen Anpresskräften an den jeweiligen Stirnseiten des Gelenkgehäuses anliegen.

Angesichts dessen ist leicht nachvollziehbar, dass das erfindungsgemäß gestaltete Kugelgelenk neben ganz erheblich verbesserter Zuverlässigkeit und Belastbarkeit im Betrieb auch noch äußerst kostengünstig produziert werden kann, da die Montage des Kugelgelenks im Wesentlichen in einem einzigen Einpressvorgang besteht. Das erfindungsgemäße Kugelgelenk kann zudem während der Herstellung, oder auch zu einem späteren Zeitpunkt während seiner Lebensdauer, durch Variation der Einpresstiefe der Lagerschale 3 im Gelenkgehäuse 2, bezüglich des Lagerspiels zwischen Kugelzapfen und Lagerschale 3, in Bezug auf die Gesamtelastizität des Kugelgelenks sowie in Bezug auf die Losbrech- und Reibmomente des Kugelzapfens 1 reguliert bzw. nachgestellt werden.

Figur 2 zeigt in einer Figur 1 entsprechenden Längsschnittdarstellung eine weitere Ausführungsform eines erfindungsgemäßen Kugelgelenks. Das Kugelgelenk gemäß Figur 2 unterscheidet sich im Wesentlichen durch die offene, ringförmige Gestalt des Gelenkgehäuses 2 sowie durch die Anordnung des Klemmrings 5. Der zur Sicherung der Position der eingepressten Lagerschale 3 im Gelenkgehäuse 2 dienende Klemmring 5 ist bei dem Kugelgelenk gemäß Figur 2 auf der zeichnungsbezogen oberen Stirnseite des Gelenkgehäuses 2 angeordnet, die dem Kugelzapfen 1 gegenüber liegt.

Ein Vorteil dieser Anordnung des Klemmrings 5 liegt insbesondere darin, dass der Klemmring 5 aufgrund der beim Zusammenbau des Kugelgelenks leichter zugänglichen zapfenabgewandten Seite des Gelenkgehäuses 2 noch einfacher und rascher positioniert und montiert werden kann. Ferner wird so der Aufbau des Kugelgelenks, insbesondere die Gestalt des Gelenkgehäuses, erheblich weiter vereinfacht, wie ein Vergleich der Figur 1 und 2 ergibt.

Man erkennt in Figur 2, dass bei einem gegenüber dem Kugelzapfen 1 angeordneten Klemmring 5 das Gelenkgehäuse 2 des Kugelgelenks im Wesentlichen nur noch durch den ringförmigen Körper 2 gebildet wird. Zudem lässt sich die Balgnut 7 bei dieser Anordnung des Klemmrings 5 auf einfachste Weise an der Kunststofflagerschale 3 anordnen. Ferner ermöglicht der größere Durchmesser und die größere Breite des Klemmrings 5 höhere Elastizitäten und damit höhere Spannkräfte im Klemmring 5, welche die Lagerschale 3 und das Gelenkgehäuse 2 somit besonders sicher zusammen halten. Schließlich ist auch die Klemmwirkung des Klemmrings 5, der mit seiner scharfen, an seinem Innendurchmesser angeordneten Klemmkante in die verhältnismäßig weiche Außenoberfläche 4 der Kunststofflagerschale 2 einschneiden kann, als besonders sicher zu bezeichnen; und es führt die Anordnung des Klemmrings auf der dem Kugelzapfen 1 abgewandten Seite zu einer freieren Gestaltungsmöglichkeit der dem Kugelzapfen 1 zugewandten Seite der Lagerschale, was konstruktive Verbesserungen und besonders große Maximalschwenkwinkel des Kugelgelenks ermöglicht.

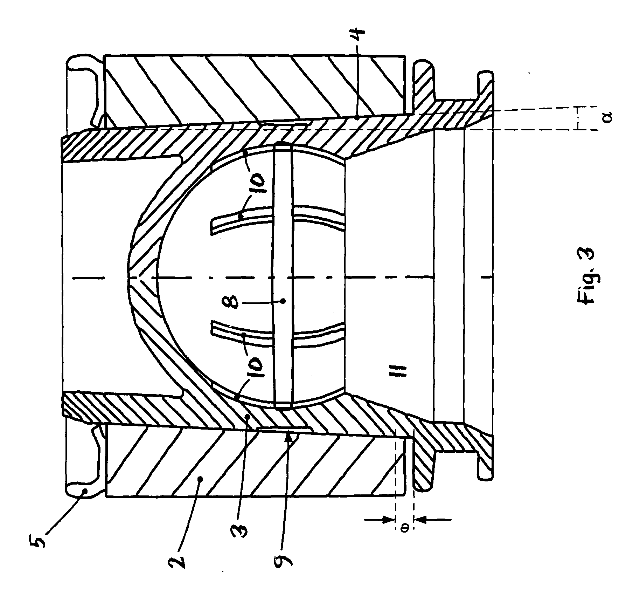

Figur 3 zeigt den Bereich des Gelenkgehäuses 2 und der Lagerschale 3 einer Ausführungsform des erfindungsgemäßen Kugelgelenks in vergrößerter schematischer Schnittdarstellung. Dabei handelt es sich um eine Variante des Kugelgelenks, bei der der Klemmring 5 auf der zapfenabgewandten Seite des Gelenkgehäuses 2 angeordnet ist. In Figur 3 erkennt man - neben der erfindungsgemäßen axialen Einstellbarkeit e der Lagerschale 3 im Gelenkgehäuse 2 - insbesondere zwei Äquatorialausnehmungen 8 und 9, von denen eine Äquatorialausnehmung 8 ringförmig umlaufend auf der kugelseitigen Oberfläche der Lagerschale 3 und die andere Äquatorialausnehmung 9 ebenfalls ringförmig umlaufend auf der gelenkgehäuseseitigen Oberfläche 4 der Lagerschale 3 angeordnet ist. Die Äquatorialausnehmungen 8, 9 dienen dazu, den äquatornahen Bereich der Lagerschale 3 von den radialen Druckspannungen zu entlasten, die beim Einpressen der Lagerschale 3 in das Gelenkgehäuse 2 entstehen. Diese könnten andernfalls zum Klemmen der Gelenkkugel in der Lagerschale 3, oder zu ungleichmäßiger Abnutzung von Gelenkkugel und Lagerschale 3 während des Betriebs des Kugelgelenks führen, insbesondere da die Lagerschale 3 im äquatornahen Bereich der Gelenkkugel den Bereich ihrer geringsten Wanddicke aufweist.

Ferner erkennt man in Figur 3 eine Anzahl am Umfang der Lagerschale 3 verteilter Schmiernuten 10, die für eine gleichmäßige Verteilung des Schmiermittels zwischen Lagerschale 3 und Gelenkkugel sorgen. Die Schmiernuten 10 stehen an ihrem zeichnungsbezogen nach unten weisenden Ende in offener Verbindung mit dem Innenraum 11 der Lagerschale 3 im Bereich des hier nicht dargestellten Kugelhalses. Dort kann beim Zusammenbau des Kugelgelenks ein Schmiermittelvorrat deponiert werden, aus dem der Gleitbereich zwischen Lagerschale 3 und Gelenkkugel mittels der Schmiernuten 10 stets mit Schmiermittel versorgt werden kann. Zusätzlich steht auch die innenseitige Äquatorialausnehmung 8, die die Schmiemuten 10 miteinander verbindet, zur Verteilung des Schmiermittels zur Verfügung.

Im Ergebnis wird deutlich, dass dank der Erfindung die Lebensdauer und Robustheit von Kugelgelenken, beispielsweise von Kugelgelenken für Pendelstützen, sowie die Reproduzierbarkeit der qualitätsbestimmenden Eigenschaften solcher Kugelgelenke bei der Produktion, wesentlich verbessert werden können. Trotz der so ermöglichten Qualitätsverbesserung am Produkt werden dank der Erfindung gleichzeitig beträchtliche Vereinfachungen und Kosteneinsparungen bei der Herstellung der Kugelgelenke erzielt.

### Bezugszeichenliste

- 1.: Kugelzapfen
- 2.: topfförmiges Gelenkgehäuse
- 3.: Lagerschale
- 4.: Innen-/ Außenkontur
- 5.: Klemmring
- 6.: zylindrischer Bereich
- 7.: Balgnut
- 8.: Oberflächenausnehmung
- 9.: Oberflächenausnehmung
- 10.: Schmiernuten
- 11.: zapfenseitiger Innenraum

## Patentansprüche

1. Kugelgelenk, insbesondere für eine Pendelstütze eines Kraftfahrzeugs, mit einem im Wesentlichen ring- oder topfförmigen Gelenkgehäuse (2), in dessen Innenraum eine Lagerschale (3) anordenbar ist, in welcher die Kugel eines Kugelzapfens (1) gleitbeweglich aufnehmbar ist, wobei die Innenkontur (4) des Gelenkgehäuses (2) und die Außenkontur (4) der Lagerschale (3) im Wesentlichen kegelstumpfförmig ausgebildet sind,
**dadurch gekennzeichnet,**
**dass** die Lagerschale (3) im Gelenkgehäuse (2) in zapfenaxialer Richtung im Wesentlichen frei positionierbar ist.

2. Kugelgelenk nach Anspruch 1,
**dadurch gekennzeichnet,**
**dass** die Steigung des Kegelstumpfs von Lagerschale (3) und Gelenkgehäuse (2) 1 zu 5 beträgt.

3. Kugelgelenk nach Anspruch 1 oder 2,
**dadurch gekennzeichnet,**
**dass** eine axiale Fixierung der Lagerschale (3) relativ zum Gelenkgehäuse (2) durch einen zwischen Gelenkgehäuse (2) und Lagerschale (3) angeordneten Klemmring (5) erfolgt.

4. Kugelgelenk nach Anspruch 3,
**dadurch gekennzeichnet,**
**dass** der Klemmring (5) kugelzapfenseitig am Gelenkgehäuse (2) angeordnet ist.

5. Kugelgelenk nach Anspruch 3,
**dadurch gekennzeichnet,**
**dass** der Klemmring (5) gehäusedeckelseitig am Gelenkgehäuse (2) angeordnet ist.

6. Kugelgelenk nach einem der Ansprüche 1 bis 5,
**dadurch gekennzeichnet,**
**dass** die Lagerschale (3) gehäusedeckelseitig umgeformt, insbesondere ultraschallumgeformt ist, wobei der umgeformte Bereich die Lagerschale (3) formschlüssig im Gelenkgehäuse (2) verankert.

7. Kugelgelenk nach einem der Ansprüche 1 bis 6,
**dadurch gekennzeichnet,**
**dass** die Lagerschale (3) im Bereich des Kugeläquators kugelseitig und/oder gehäuseseitig eine Oberflächenausnehmung (8, 9) aufweist.

8. Kugelgelenk nach einem der Ansprüche 1 bis 7,
**dadurch gekennzeichnet,**
**dass** die Lagerschale (3) kugelseitig Schmiernuten (10) aufweist, wobei die Schmiernuten (10) mit dem zapfenseitigen Innenraum (11) der Lagerschale (3) in Verbindung stehen.
